# EUROPÄISCHE PATENTSCHRIFT

(11) **EP 3 198 175 B1**
(45) Veröffentlichungstag und Bekanntmachung des Hinweises auf die Patenterteilung: **29.08.2018**
(21) Anmeldenummer: 16728017.1
(22) Anmeldetag: 09.06.2016
(51) Int. Cl.: F16J 15/12, F16L 23/18

(54) **DICHTUNG ZUM ABDICHTEN VON FLANSCHVERBINDUNGEN**
SEAL FOR SEALING FLANGE CONNECTIONS
JOINT D'ÉTANCHÉITÉ SERVANT À ÉTANCHÉIFIER DES RACCORDS PAR BRIDES

(30) Priorität: 12.06.2015 DE 202015004111 U
(43) Veröffentlichungstag der Anmeldung: 02.08.2017
(73) Patentinhaber: Hecker Holding GmbH & Co. KG, 71093 Weil im Schönbuch (DE)
(72) Erfinder: KURZ, Hariolf, 91578 Leutershausen (DE); HUEBNER-HECKER, Michael, 71093 Weil im Schönbuch (DE)
(74) Vertreter: DREISS Patentanwälte PartG mbB
(86) Internationale Anmeldenummer: PCT/EP2016/063123
(87) Internationale Veröffentlichungsnummer: WO 2016/198506

(56) Entgegenhaltungen:
- DE-A1- 4 430 183
- DE-B- 1 023 736
- US-A1- 2007 045 968

## Beschreibung

Die vorliegende Erfindung betrifft eine Dichtung zum Abdichten von Flanschverbindungen.

Zum Abdichten von Flanschverbindungen sind Gummi-Stahldichtungen bekannt, die aus einem Gummiring und einem vom Gummiring umschlossenen Stahlring aufgebaut sind. Hiermit werden gute Abdichteigenschaften erreicht. Allerdings besteht bei solchen Dichtungen die Gefahr, dass der Gummiring bei zu hohen Schraubkräften zerstört wird, da die Schraubkraft vollständig auf den Gummiring wirkt. Durch viskoses Verhalten des Gummis weicht die Dichtung zudem der aufgeprägten Last aus. Eine zuverlässige Abdichtung ist damit nur bedingt gewährleistet.

Ebenfalls bekannt sind Gummi-Stahldichtungen, die aus einem Gummiring und einem am Außenumfang des Gummirings angeordneten Stahlring aufgebaut sind. Stahlring und Gummiring sind mittels einer Nutverbindung oder eines Haftvermittlers verbunden. Durch den Stahlring kann die auf den Gummiring aufgebrachte Schraubkraft begrenzt werden. Allerdings ist eine solche Dichtung aufwändig in der Herstellung. DE 10 23 736 B und US 2007/045968 A1 zeigen jeweils eine Dichtung zum Abdichten von Flanschverbindungen mit Merkmalen des Oberbegriffs von Anspruch 1.

Der vorliegenden Erfindung liegt die Aufgabe zugrunde, mit einfachen konstruktiven Mitteln eine zuverlässige Abdichtung zu ermöglichen.

Die voranstehende Aufgabe wird durch eine Dichtung mit den Merkmalen des Anspruchs 1 gelöst. Danach umfasst die Dichtung ein ringscheibenförmiges Elastomerelement begrenzt durch einen radial innenliegenden Ringrand, einen radial außenliegenden Ringrand, eine Ringscheibenoberseite und eine Ringscheibenunterseite, wobei das Elastomerelement angrenzend an den radial innenliegenden Ringrand mindestens einen umlaufenden Wulst oder Dichtwulst aufweist, der relativ zur Ringscheibenoberseite und/oder zur Ringscheibenunterseite hervorsteht, und ein im Elastomerelement bündig zur Ringscheibenoberseite und/oder zur Ringscheibenunterseite eingebettetes ringförmiges Stützelement aus Metall, wobei das Stützelement Kerben zur Verbindung mit dem Elastomerelement aufweist und durch das Elastomerelement zumindest teilweise umschlossen ist.

Demnach kann das Stützelement durch das Elastomerelement teilweise verschlossen sein, so dass das Stützelement mit einer Ober- und/oder Unterseite des Elastomerelements bündig ist. Ebenfalls kann das Stützelement durch das Elastomerelement vollständig verschlossen sein, beispielsweise durch eine die Funktion, nämlich die Bereitstellung einer Anlagefläche am Stützelement, nicht beeinträchtigende und durch den Spritzgießvorgang bedingte Fließhaut.

Durch das im Inneren des Elastomerelements angeordnete metallische Stützelement mit daran ausgebildeten Kerben ist das Stützelement sicher mit dem Elastomerelement verbunden. Durch die Kerben ist auch bei bündiger Ausrichtung des Stützelements zur Ringscheibenoberseite und/oder zur Ringscheibenunterseite des Elastomerelements eine insbesondere in alle Richtungen formschlüssige Befestigung des Stützelements verwirklicht. Die Kerben dienen zur formschlüssigen Befestigung des Stützelements am Elastomerelement. Durch die zumindest einseitig bündige, vorzugsweise beidseitig bündige, Ausrichtung des Stützelements innerhalb des Elastomerelements ist eine Kraftbegrenzung der maximal auf das Elastomerelement aufbringbaren Schraubenkraft erreicht, und zwar in Form eines Kraftnebenschlusses.

Die Herstellung der Dichtung lässt sich mit einfachen konstruktiven Mitteln bewerkstelligen, da diese durch Einlegen des vorkonfektionierten Stützelements in die Kavität einer Spritzgießmaschine erfolgen kann. Das Stützelement kann dann mit dem später das Elastomerelement bildenden Elastomer umspritzt werden, wobei die Kerben den Fließvorgang des Elastomers begünstigen. Nach Befüllen der Kavität ist die Dichtung ohne oder nur mit geringfügiger Nacharbeit fertiggestellt.

Das Elastomer kann - auch in Abhängigkeit von der Dichtungsanwendung, in der die Dichtung eingesetzt werden soll - aus Elastomeren oder thermoplastischen Elastomeren ausgebildet sein.

Die Dichtung kann insbesondere bei Flanschverbindungen mit ebenen Flanschflächen zum Einsatz kommen.

Die Kerben können einen U-förmigen, rechteckförmigen oder dreieckigen Querschnitt aufweisen. Die Kerben sind in radialer Richtung oder schräg am Stützelement angeordnet.

Der Begriff "ringscheibenförmig" oder "ringförmig" ist dahingehend zu verstehen, dass dieser sowohl eine kreisförmige, als auch eine elliptische Ausgestaltung mit einschließt. Demnach können die Dichtung und damit auch das Elastomerelement und das Stützelement, eine kreisförmige oder elliptische Kontur aufweisen.

In vorteilhafter Weise können die Kerben des Stützelements zur Ringscheibenoberseite und/oder zur Ringscheibenunterseite des Elastomerelements hin ausgerichtet ausgebildet sein. Hiermit wird eine gleichmäßige Fixierung des Stützelements innerhalb des Elastomerelements erreicht. Der Herstellungsvorgang wird vereinfacht, da durch die zur Ringscheibenoberseite und/oder zur Ringscheibenunterseite hin orientierten Kerben ein Fließen des gespritzten Elastomers in einer Spritzgießmaschine begünstigt wird.

Zweckmäßigerweise kann das Elastomerelement angrenzend an den radial innen liegenden Ringrand zwei umlaufende Dichtwulste aufweisen. Die zwei Dichtwulste sind radial benachbart zueinander. Weiter schließen die beiden Dichtwulste in ihrer Mitte eine Vertiefung ein. Durch die Ausgestaltung mittels zwei Dichtwulsten kann während des Spannens der Dichtung ein Bewegen der Dichtung in Richtung Flanschmitte gering gehalten werden, da die Dichtwulste in die zwischen ihnen befindliche Vertiefung hinein ausweichen können.

Weiter ist es von Vorteil, wenn das Stützelement zur Ringscheibenoberseite und/oder zur Ringscheibenunterseite des Elastomerelements hin abgeflacht ist. Dabei kann der abgeflachte Bereich bündig zur Ringscheibenoberseite und/oder zur Ringscheibenunterseite sein. Hierdurch wird eine große Auflagefläche geschaffen, so dass eine zuverlässige Dichtung im Kraftnebenfluss realisiert ist. Dies schafft eine große Anlagefläche zur Kraftübertragung zwischen den Flanschverbindungen. Zudem wird auf diese Weise auch die Anordnung des Stützelements innerhalb der Spritzgussmaschine erleichtert.

Im Konkreten kann das Stützelement als Metallring ausgebildet sein, beispielsweise als Drahtring. Dieser kann einen geschlossenen Ring bilden, wobei die Kontaktstellen aneinander befestigt sein können, beispielsweise durch Verschweißen oder Verlöten. Ebenfalls denkbar ist ein Herstellen des Metallrings durch Stanzen, wobei der Metallring in sich geschlossen sein kann. Weiter kann der Metallring eine strukturierte oder konturierte Oberfläche aufweisen. Hiermit ist ein einfach herzustellendes und stabiles Stützelement geschaffen.

Alternativ hierzu kann das Stützelement aus gewickeltem Metalldraht ausgebildet sein. Dabei kann Metalldraht mit kreisförmigem, elliptischem, rechteckigem oder quadratischem Querschnitt zum Einsatz kommen. Auch auf diese Weise ist ein konstruktiv einfaches Stützelement geschaffen.

Zum Bereitstellen einer sicheren Befestigung sowie einer großen Auflagefläche des Stützelements kann dieses mehr als eine Windung aufweisen. Dabei kann der Metalldraht spiralförmig gewickelt sein. Denkbar ist eine Wicklung mit mehreren, insbesondere zwei bis drei, Windungen.
Aus Gründen des Korrosionsschutzes ist es von Vorteil, wenn das Elastomerelement angrenzend an den radial außen liegenden Ringrand an Ringscheibenoberseite, Ringscheibenunterseite und am radial außen liegenden Ringrand jeweils eine geschlossene Oberfläche aufweist. Mit anderen Worten ist das Elastomerelement angrenzend an den radial außen liegenden Ringrand zum Stützelement hin geschlossen. Durch dieses am radial außen liegenden Ringrand verbleibende ringförmige Elastomersegment kann im montierten Zustand der Dichtspalt zwischen zwei Flanschverbindungen verschlossen werden. Dadurch ist das Stützelement im montierten Zustand vor äußeren Einflüssen und damit vor korrosivem Angriff geschützt.

Von Vorteil ist außerdem, wenn das Elastomerelement und das Stützelement im Wesentlichen konzentrisch zueinander angeordnet sind. Dadurch ist eine gleichmäßige und stabile Ausgestaltung der Dichtung erreicht. Unter "im Wesentlichen konzentrisch" ist eine Anordnung von Elastomerelement und Stützelement zu verstehen, wenn - bezogen auf den Außendurchmesser der Dichtung - Elastomerelement und Stützelement um maximal zehn Prozent des Außendurchmessers der Dichtung exzentrisch zueinander angeordnet sind.

Die Erfindung wird im Folgenden anhand der Figuren näher erläutert. Es zeigen:
Fig.1 in mehreren, teilweise geschnittenen Ansichten ein Ausführungsbeispiel einer Dichtung;
Fig.2 in mehreren Ansichten (a), (b) und (c) ein Stützelement der Dichtung aus Fig.1; und
Fig.3 in mehreren Ansichten die Dichtung aus Fig.1 in Einbaulage an einer Flanschverbindung.

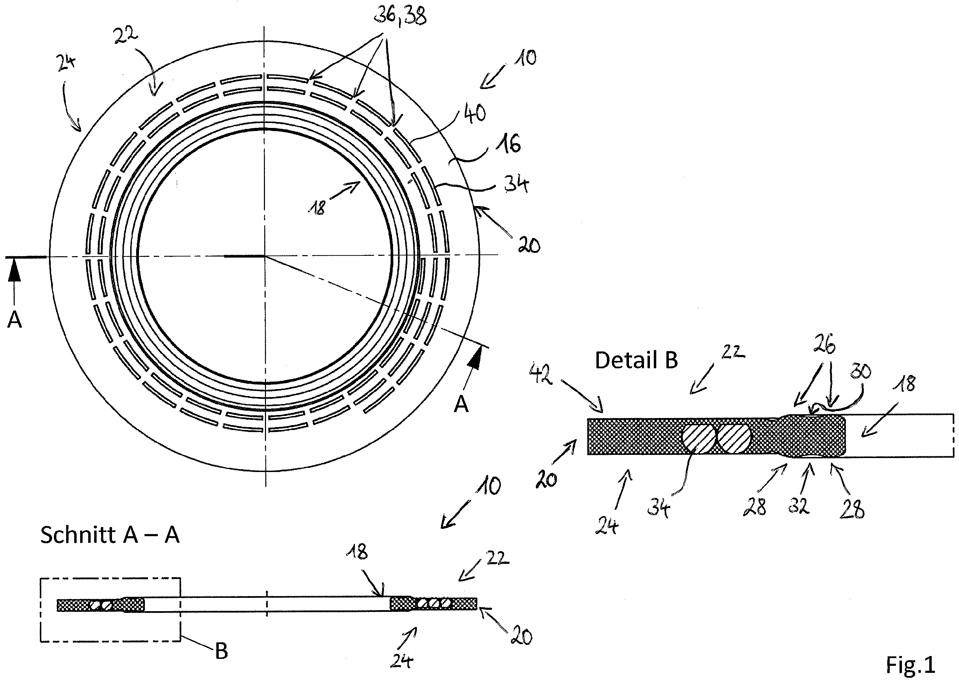

In Figur 1 ist in mehreren, teilweise geschnittenen Ansichten, eine Dichtung zum Abdichten von Flanschverbindungen dargestellt, die mit dem Bezugszeichen 10 bezeichnet ist.

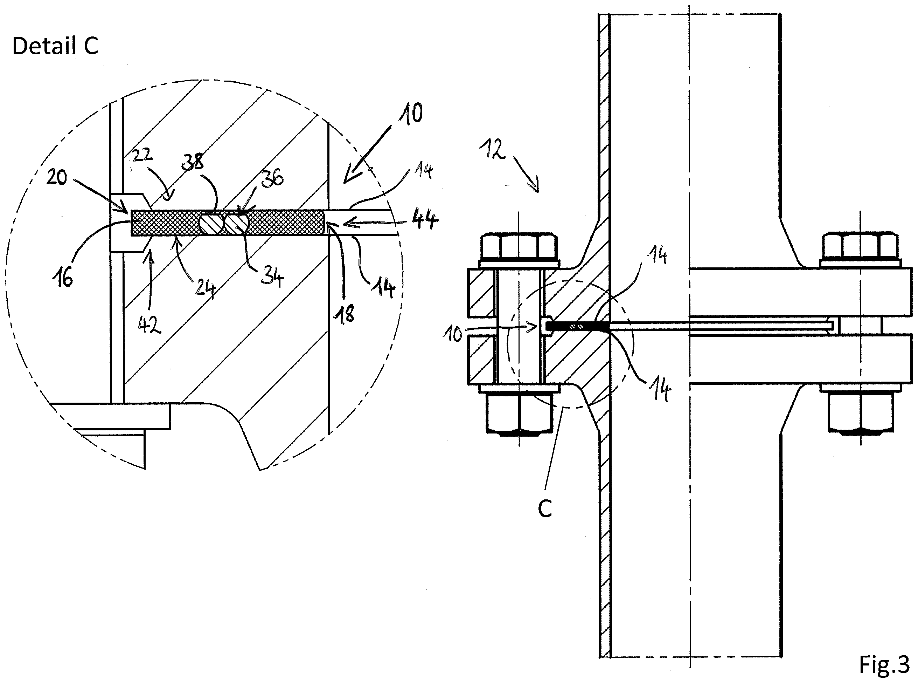

Die Dichtung 10 dient zum Abdichten von Flanschverbindungen 12 mit ebenen Flanschflächen 14 (siehe Figur 3).

Die Dichtung 10 weist ein ringscheibenförmiges Elastomerelement 16 auf, das durch einen radial innen liegenden Ringrand 18, einen radial außen liegenden Ringrand 20, eine Ringscheibenoberseite 22 und eine Ringscheibenunterseite 24 begrenzt ist (siehe Figur 1). Das Elastomerelement 16 weist angrenzend an den innen liegenden Ringrand 18 zwei umlaufende Dichtwulste 26, 28 auf, die jeweils relativ zur Ringscheibenoberseite 22 und zur Ringscheibenunterseite 24 hervorstehen. Die umlaufenden Dichtwulste 26, 28 sind radial zueinander benachbart und schließen in ihrer Mitte jeweils eine Vertiefung 30, 32 ein.

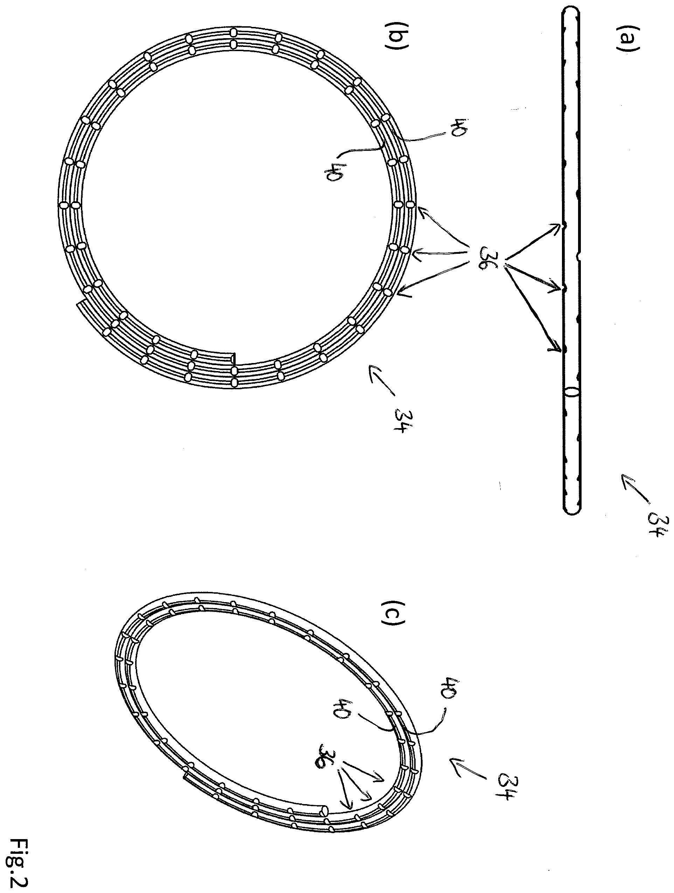

Die Dichtung 10 weist außerdem ein im Elastomerelement 16 bündig zur Ringscheibenoberseite 22 und zur Ringscheibenunterseite 24 eingebettetes ringförmiges Stützelement 34 aus Metall auf. Das Stützelement 34 weist Kerben 36 zur Verbindung mit dem Elastomerelement 16 auf (siehe Figur 2) und ist durch das Elastomerelement 16 teilweise oder ganz umschlossen, beispielsweise durch eine die Funktion nicht beeinträchtigende Fließhaut.

Die Kerben 36 des Stützelements 34 sind zur Ringscheibenoberseite 22 und zur Ringscheibenunterseite 24 des Elastomerelements 16 hin ausgebildet. Dies vereinfacht das Umspritzen mittels eines Elastomers in einer Kavität einer Spritzgießmaschine und stellt außerdem eine formschlüssige Verbindung in alle Richtungen sicher, insbesondere durch die die Kerben 36 überdeckenden Abschnitte 38 (siehe Figur 1). Das Stützelement 34 ist zur Ringscheibenoberseite 22 und zur Ringscheibenunterseite 24 des Elastomerelements 16 hin abgeflacht. So weist das ringförmige Stützelement 34 an seiner Oberseite und seiner Unterseite abgeflachte Abschnitte 40 auf (siehe Figur 2).

Das Stützelement 34 ist aus gewickeltem Metalldraht ausgebildet und weist mehr als eine Windung auf, nämlich etwas mehr als zwei Windungen (siehe Figur 2). Damit ist eine hinreichend große Anlagefläche einerseits und eine sichere Befestigung des Stützelements 34 im Elastomerelement 16 andererseits realisiert.
Das Elastomerelement 16 weist angrenzend an den radial außen liegenden Ringrand 20 an der Ringscheibenoberseite 22, der Ringscheibenunterseite 24 und am radial außen liegenden Ringrand 20 jeweils eine geschlossene Oberfläche auf. Mit anderen Worten verbleibt am radial außen liegenden Ringrand 20 ein ringförmiger Elastomerabschnitt 42, welcher im montierten Zustand der Dichtung 10 den Dichtspalt 44 verschließt (siehe Figur 3). Hiermit ist das metallische Stützelement 34 vor äußeren Einflüssen und damit insbesondere vor korrosivem Angriff geschützt.

Das Elastomerelement 16 und das Stützelement 34 sind im Wesentlichen konzentrisch zueinander angeordnet.

## Patentansprüche

1. Dichtung (10) zum Abdichten von Flanschverbindungen (12), mit einem ringscheibenförmigen Elastomerelement (16) begrenzt durch einen radial innenliegenden Ringrand (18), einen radial außenliegenden Ringrand (20), eine Ringscheibenoberseite (22) und eine Ringscheibenunterseite (24), wobei das Elastomerelement (16) angrenzend an den innenliegenden Ringrand (18) mindestens einen umlaufenden Dichtwulst (26, 28) aufweist, der relativ zur Ringscheibenoberseite (22) und/oder zur Ringscheibenunterseite (24) hervorsteht, **gekennzeichnet durch** ein im Elastomerelement (16) bündig zur Ringscheibenoberseite (22) und/oder zur Ringscheibenunterseite (24) eingebetteten ringförmigen Stützelement (34) aus Metall, wobei das Stützelement (34) Kerben (36) zur Verbindung mit dem Elastomerelement (16) aufweist und durch das Elastomerelement (16) zumindest teilweise umschlossen ist, wobei die Kerben (36) in radialer Richtung oder schräg am Stützelement (34) angeordnet sind.

2. Dichtung (10) nach Anspruch 1, **dadurch gekennzeichnet, dass** die Kerben (36) des Stützelements (34) zur Ringscheibenoberseite (22) und/oder zur Ringscheibenunterseite (24) des Elastomerelements (16) hin ausgebildet sind.

3. Dichtung (10) nach Anspruch 1 oder 2, **dadurch gekennzeichnet, dass** das Elastomerelement (16) angrenzend an den innenliegenden Ringrand (18) zwei umlaufende Dichtwulste (26, 28) aufweist.

4. Dichtung (10) nach einem der vorhergehenden Ansprüche, **dadurch gekennzeichnet, dass** das Stützelement (34) zur Ringscheibenoberseite (22) und/oder zur Ringscheibenunterseite (24) des Elastomerelements (16) hin abgeflacht ist.

5. Dichtung (10) nach einem der vorhergehenden Ansprüche, **dadurch gekennzeichnet, dass** das Stützelement (34) als Metallring ausgebildet ist.

6. Dichtung (10) nach einem der Ansprüche 1 bis 5, **dadurch gekennzeichnet, dass** das Stützelement (34) aus gewickeltem Metalldraht ausgebildet ist.

7. Dichtung (10) nach Anspruch 6, **dadurch gekennzeichnet, dass** das Stützelement (34) mehr als eine Windung aufweist.

8. Dichtung (10) nach einem der vorhergehenden Ansprüche, **dadurch gekennzeichnet, dass** das Elastomerelement (16) angrenzend an den radial außenliegenden Ringrand (20) an Ringscheibenoberseite (22), Ringscheibenunterseite (24) und am radial außenliegenden Ringrand (20) jeweils eine geschlossene Oberfläche aufweist.

9. Dichtung (10) nach einem der vorhergehenden Ansprüche, **dadurch gekennzeichnet, dass** das Elastomerelement (16) und das Stützelement (34) im Wesentlichen konzentrisch zueinander angeordnet sind.

## Claims

1. Gasket (10) for sealing flange joints (12), having an elastomer member (16), in the form of a circular or elliptical annulus, bounded by an annular edge (18) situated on the inside radially, an annular edge (20) situated on the outside radially, an annulus top face (22) and an annulus bottom face (24), the elastomer member (16) having at least one sealing bead (26, 28) which extends round in a loop adjacent the annular edge (18) situated on the inside and which projects relative to the annulus top face (22) and/or annulus bottom face (24), **characterised by** an annular supporting member (34) of metal which is embedded in the elastomer member (16) to be flush with the annulus top face (22) and/or annulus bottom face (24), the supporting member (34) having notches (36) for connecting it to the elastomer member (16) and being at least partly enclosed by the elastomer member (16), the notches (36) being arranged in the supporting member (34) obliquely or in a radial direction.

2. Gasket (10) according to claim 1, **characterised in that** the notches (36) in the supporting member (34) are formed to face towards the annulus top face (22) of the elastomer member (16) and/or towards the annulus bottom face (24) thereof.

3. Gasket (10) according to claim 1 or 2, **characterised in that** the elastomer member (16) had two sealing beads (26, 28) extending round in a loop adjacent the annular edge (18) situated on the inside.

4. Gasket (10) according to one of the preceding claims, **characterised in that** the supporting member (34) is flatted with the flatting facing towards the annulus top face (22) of the elastomer member (16) and/or towards the annulus bottom face (24) thereof.

5. Gasket (10) according to one of the preceding claims, **characterised in that** the supporting member (34) is in the form of a metal ring.

6. Gasket (10) according to one of claims 1 to 5, **characterised in that** the supporting member (34) is in the form of coiled metal wire.

7. Gasket (10) according to claim 6, **characterised in that** the supporting member (34) has more than one turn of the coil.

8. Gasket (10) according to one of the preceding claims, **characterised in that** the elastomer member (16) has a continuous surface adjacent to each of the annular edge (20) situated on the outside radially, the annulus top face (22), the annulus bottom face (24), and the annular edge (20) situated on the outside radially.

9. Gasket (10) according to one of the preceding claims, **characterised in that** the elastomer member (16) and the supporting member (34) are arranged substantially concentrically to one another.

## Revendications

1. Joint d'étanchéité (10) pour étanchéifier des raccords à brides (12), comprenant un élément en élastomère en forme de disque annulaire (16) délimité par un bord annulaire radialement intérieur (18), un rebord annulaire radialement extérieur (20), une face supérieure de disque annulaire (22) et une face inférieure de disque annulaire (24), dans lequel l'élément en élastomère (16), en un endroit adjacent au bord annulaire intérieur (18), comporte au moins un bourrelet d'étanchéité circonférentiel (26, 28) qui fait saillie par rapport à la face supérieure de disque annulaire (22) et/ou par rapport à face inférieure de disque annulaire (24), **caractérisé par** un élément de support de forme annulaire (34) en métal incorporé dans l'élément en élastomère (16) affleurant par rapport à la face supérieure de disque annulaire (22) et/ou par rapport à la face inférieure de disque annulaire (24), dans lequel l'élément de support (34) comporte des entailles (36) de raccordement à l'élément en élastomère (16) et est au moins partiellement entouré par l'élément en élastomère (16), dans lequel les entailles (36) sont agencées dans une direction radiale ou obliquement sur l'élément de support (34).

2. Joint d'étanchéité (10) selon la revendication 1, **caractérisé en ce que** les entailles (36) de l'élément de support (34) sont formées sur la face supérieure de disque annulaire (22) et/ou la face inférieure de disque annulaire (24) de l'élément en élastomère (16).

3. Joint d'étanchéité (10) selon la revendication 1 ou 2, **caractérisé en ce que** l'élément en élastomère (16), en un endroit adjacent au bord annulaire intérieur (18), présente deux bourrelets d'étanchéité circonférentiels (26, 28) .

4. Joint d'étanchéité (10) selon l'une quelconque des revendications précédentes, **caractérisé en ce que** l'élément de support (34) est aplati sur la face supérieure de disque annulaire (22) et/ou la face inférieure de disque annulaire (24) de l'élément en élastomère (16).

5. Joint d'étanchéité (10) selon l'une des revendications précédentes, **caractérisé en ce que** l'élément de support (34) est réalisé sous la forme d'un anneau métallique.

6. Joint d'étanchéité (10) selon l'une des revendications 1 à 5, **caractérisé en ce que** l'élément de support (34) est formé à partir d'un fil métallique enroulé.

7. Joint d'étanchéité (10) selon la revendication 6, **caractérisé en ce que** l'élément de support (34) présente plus d'un enroulement.

8. Joint d'étanchéité (10) selon l'une quelconque des revendications précédentes, **caractérisé en ce que** l'élément en élastomère (16), en un endroit adjacent au bord annulaire radialement extérieur (20), présente une surface fermée au niveau de la face supérieure de disque annulaire (22), de la face inférieure de disque annulaire (24) et au niveau du bord annulaire radialement extérieur (20) .

9. Joint d'étanchéité (10) selon l'une quelconque des revendications précédentes, **caractérisé en ce que** l'élément en élastomère (16) et l'élément de support (34) sont agencés de manière sensiblement concentrique l'un par rapport à l'autre.
